# FASCICULE DE BREVET EUROPEEN

(11) **EP 1 091 313 B1**
(45) Date de publication et mention de la délivrance du brevet: **30.09.2009**
(21) Numéro de dépôt: 00402743.9
(22) Date de dépôt: 05.10.2000
(51) Int. Cl.: G06K 7/00, H01R 12/16, B60R 25/04

(54) **Agencement pour la réception d'un support de données dans un dispositif d'échange de données comportant un support pivotant**
System zur Aufnahme eines Datenträgers in einer Datenaustauschvorrichtung mit schwenkbarer Unterstützung
System for receiving a data carrier in a data exchange device with swivel mount

(30) Priorité: 07.10.1999 FR 9912479
(43) Date de publication de la demande: 11.04.2001
(73) Titulaire: VALEO SECURITE HABITACLE S.A.S., 94042 Créteil Cédex (FR)
(72) Inventeur: Batty, Raoul, 58000 Nevers (FR); Canard, Louis, 58000 Nevers (FR)
(74) Mandataire: Jacquot, Ludovic R. G.

(56) Documents cités:
- EP-A- 0 840 246
- WO-A-98/13905
- FR-A- 2 713 173

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, qui est par exemple en forme de carte ou de badge globalement rectangulaire, porte des données d'identification de l'utilisateur du véhicule qui l'autorisent lorsqu'il introduit son badge dans le dispositif de lecture, à utiliser le véhicule en lui permettant notamment de procéder au démarrage du moteur du véhicule.

On connaît de nombreux exemples de tels agencements dans lesquels le support de données est une carte ou un badge rigide ou semi-rigide comportant par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement d'arrière en avant dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin de résoudre ce problème, on a proposé dans la demande de brevet français n°98.07249 déposée le 9 juin 1998 un agencement du type dans lequel le support de données comporte un cran latéral de blocage et le boîtier comporte un levier commandé de blocage du support qui est monté pivotant, autour d'un axe perpendiculaire au plan dans lequel est située la direction longitudinale d'introduction du support de données dans le boîtier, entre une position de blocage dans laquelle une extrémité libre du levier de blocage formant doigt de blocage s'étend à l'intérieur du cran de blocage, et une position escamotée dans laquelle le doigt de blocage est situé hors du cran pour permettre l'extraction du support de données, d'avant en arrière, hors du boîtier.

Cette conception n'est pas entièrement satisfaisante dans la mesure où la simple introduction du badge en position active dans le logement ne permet pas de retenir automatiquement le badge, des moyens supplémentaires de commande du levier de blocage étant prévus à cet effet.

Dans d'autres conceptions dans lesquelles l'intervention du levier de blocage est automatique, il est nécessaire de prévoir des moyens supplémentaires pour verrouiller le levier de blocage afin d'éviter toute extraction accidentelle du badge en dehors du logement.

Un agencement selon le préambule de la revendication 1 est décrit dans le document WO 98/13905. Plus précisément, cet agencement comprend des moyens permettant de retenir un support de données, et notamment une carte SIM, dans un téléphone portable.

La présente invention concerne un agencement, destiné à équiper un véhicule automobile, pour l'échange de données entre un support de données rigide, ou semi-rigide, contenant des données représentatives d'un utilisateur autorisé, et un dispositif d'échange de données, comportant un boîtier dans lequel le support de données est introduit manuellement dans un logement dans un support articulé dudit boîtier où il occupe une position active déterminée,
ledit support articulé étant monté pivotant par rapport au corps du boîtier autour d'un axe agencé à une première extrémité longitudinale du support articulé, entre une position ouverte d'introduction ou d'extraction, dans laquelle une extremité ouverte est accessible, et une position fermée dans laquelle l'extrémité ouverte est obturée par une portion de paroi fixe en vis-à-vis du corps du boîtier,
**caractérisé en ce que** ledit boîtier comprend des moyens de commande d'ouverture et de verrouillage en position fermée dudit support articulé du type « push-push », c'est-à-dire du type selon lequel une première pression sur une partie du support articulé permet de le fermer, en le faisant pivoter autour de son axe d'articulation, vers ladite position fermée dans laquelle il est retenu et verrouillé, et
selon lequel, en partant de ladite position fermée, une deuxième pression, à nouveau dans le sens de la fermeture, permet le déverrouillage du support articulé et son ouverture.

Par ailleurs, pour alimenter un circuit électrique, par exemple un circuit de démarrage du moteur du véhicule qui est associé à des moyens d'échange de données avec celles contenues dans le badge, afin d'autoriser ou non un ordre de démarrage du moteur du véhicule, l'agencement proposé dans le document 98.07249 est aussi du type dans lequel le pivotement du levier de blocage entre ses positions escamotée et de blocage est commandé par un bouton de commande qui est monté coulissant par rapport au bottier, qui est relié au levier de blocage et qui est associé à un interrupteur de marche-arrêt qui commande un circuit électrique de démarrage du véhicule.

Dans cette conception, le bouton de commande assure donc deux fonctions déterminantes, c'est-à-dire le blocage du support de données et une fonction d'interrupteur électrique, qui sont nécessaires à la réalisation d'une phase sécurisée de démarrage du véhicule.

Afin de maîtriser complètement la phase sécurisée de démarrage du véhicule, et notamment la séquence électrique de démarrage du véhicule de manière simple, c'est à dire sans que l'utilisateur n'ait besoin d'agir sur un commutateur rotatif qui, de manière connue, provoque habituellement en séquence l'alimentation de différents circuits électriques du véhicule, et sans que l'utilisateur n'ait en fait besoin d'agir directement et volontairement sur un quelconque bouton ou organe de commande, l'invention propose en outre un agencement dans lequel le boîtier comporte un curseur monté coulissant, sous l'action du support de données, entre une position de repos vers laquelle il est rappelé élastiquement et une position de déclenchement dans laquelle il agit sur un premier commutateur électrique du boîtier qui permet l'alimentation du circuit électrique de démarrage du véhicule et sur lequel le support de données vient agir lors de sa course d'introduction dans le logement du support articulé ;

Selon d'autres caractéristiques de l'invention :
- le support articulé est de forme générale complémentaire de celle du support de données et, en position fermée, est reçu dans une fenêtre du corps du boîtier complémentaire de la forme du support articulé :
- le support articulé est monté articulé par rapport au boîtier autour d'un axe horizontal inférieur et le support articulé est monté pivotant entre une position ouverte et une position fermée dans laquelle la direction générale longitudinale du support articulé est sensiblement verticale ;
- le support articulé comporte une came de déclenchement d'un deuxième commutateur électrique du boîtier, qui permet l'alimentation électrique du démarreur du moteur, et qui agit sur ce commutateur lorsque le support articulé pivote de sa position ouverte vers sa position fermée ;
- le support articulé est rappelé élastiquement vers sa position ouverte, et en ce qu'il est prévu des moyens escamotables de verrouillage du support articulé en position fermée ;
- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective qui illustre un agencement selon l'invention et sur laquelle le badge de support de données est illustré en position extraite, au-dessus du logement du boîtier qui le reçoit en position active ;
- la figure 2 est une vue en perspective éclatée des principaux composants de l'agencement selon l'invention ;
- la figure 3 est une vue en section partielle par un plan vertical médian de l'agencement selon l'invention avec les différents composants dans les positions respectives qu'ils occupent à la figure 1 ;
- la figure 4 est une vue similaire à celle de la figure 3 sur laquelle le badge est illustré en position introduite dans le support articulé, avec ce dernier représenté en position ouverte ; et
- la figure 5 est une vue similaire à celles des figures 3 et 4 sur laquelle le badge est illustré en position active avec le support articulé en position fermée.

Dans la description qui va suivre, on utilisera, à titre non limitatif, les termes verticaux, horizontal, avant, arrière, etc. notamment en référence aux figures et ceci pour faciliter la compréhension de la description.

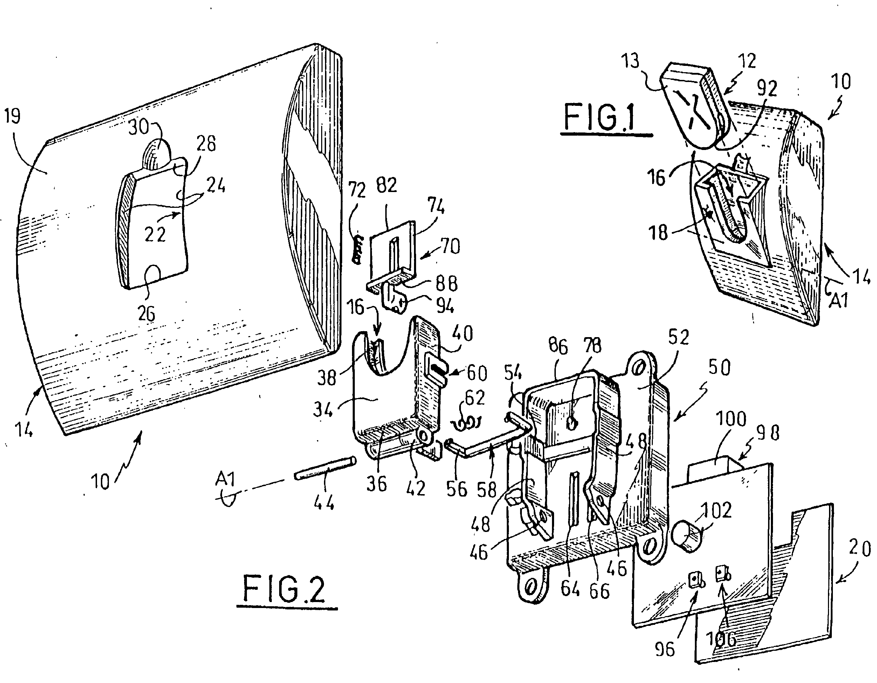

L'agencement 10 selon l'invention représenté notamment dans son ensemble aux figures 1 et 2 comporte un boîtier 14 destiné à recevoir un badge 12 formant support de données. Le badge 12 est un élément rigide, ici de forme générale sensiblement parallélépipédique rectangle, qui est susceptible d'être reçu dans un logement 16 du boîtier 14.

Conformément aux enseignements de l'invention, le logement 16 est formé dans un support 18 qui est monté articulé par rapport au boîtier 14 autour d'un axe horizontal A1.

Le boîtier 14 est une pièce en forme générale de console creuse moulée en matière plastique qui est délimitée par une face avant incurvée convexe 19 et qui est fermé par un fond vertical arrière en forme de plaque 20.

La face avant 19 comporte une fenêtre rectangulaire 22 orientée longitudinalement selon la direction verticale et qui est délimitée par deux bords latéraux parallèles et opposés 24 ainsi que par un bord inférieur horizontal 26 et par un bord supérieur horizontal 28 au-dessus duquel est formée une creusure 30 pour faciliter la manipulation du support articulé 18.

Le support articulé 18 se présente sous la forme d'un étui de forme générale parallélépipédique rectangle qui est délimité notamment par une face transversale frontale 34, par un fond horizontal inférieur 36, par une face transversale dorsale 38 qui, comme la face 34, est partiellement évidée à sa partie supérieure, et par deux faces latérales d'orientation verticale parallèles et opposées 40. Comme on peut le voir sur les figures, le support articulé 18 en forme d'étui est ouvert à sa partie supérieure et il délimite ainsi intérieurement un logement de forme parallélépipédique rectangle qui est ouvert à sa partie supérieure pour permettre d'y introduire, ou d'en extraire, le badge 12 de forme et de dimensions complémentaires de celles du logement 16.

En dessous de son fond 36, le support 18 comporte un renflement 42 qui reçoit une tige 44 pour l'articulation du support 18 par rapport au boîtier 14 autour de l'axe horizontal inférieur A1.

Les extrémités latérales opposées de la tige d'articulation 44 sont chacune reçue dans un trou correspondant 46, les deux trous alignés horizontalement 46 étant formés à la partie inférieure de deux ailes latérales verticales opposées 48 appartenant à un cadre ou châssis fixe 50 comportant notamment une plaque verticale de châssis 52.

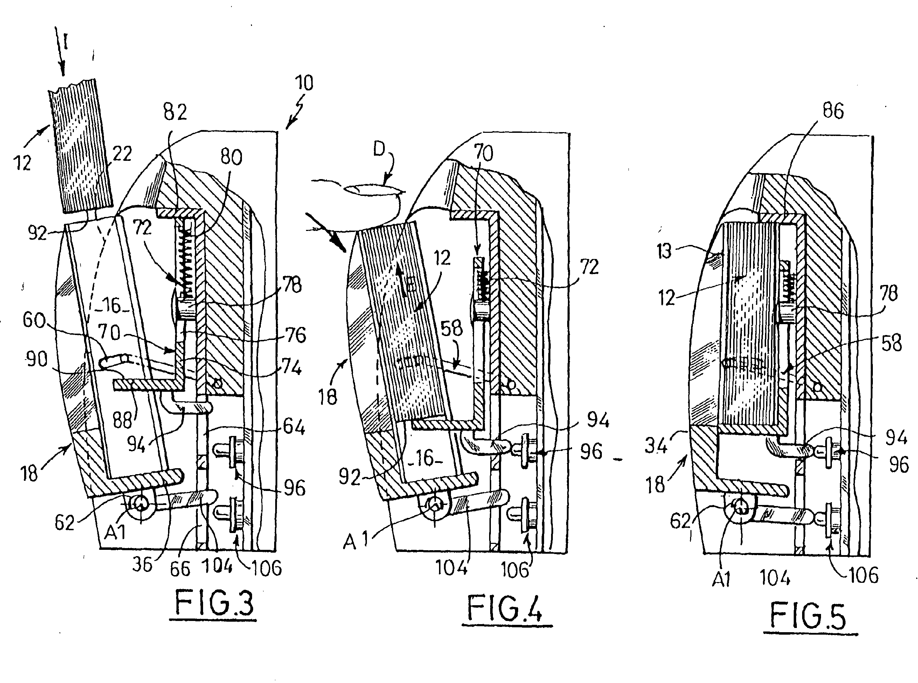

Les deux ailes 48 délimitent chacune un logement 54, sensiblement à mi-hauteur qui reçoivent les branches latérales 56 d'un organe articulé 58 de retenue et de verrouillage en position fermée du support articulé 18, les extrémités libres des branches 56 étant à cet effet reçues dans des rainures 60 formés dans les faces latérales 40 de l'étui 18 avec des moyens connus, non représentés en détail, par exemple du type à cames en forme de coeur, qui, en association avec un ressort 62 qui rappelle élastiquement le support articulé en position ouverte, constituent des moyens de commande de l'ouverture et du verrouillage en position fermée du support articulé 18 du type "push-push", c'est-à-dire du type selon lequel une première pression sur la partie supérieure du support articulé 18 permet de le fermer, en le faisant pivoter autour de son axe horizontal d'articulation en partant de la position illustrée à la figure 3 jusqu'à la position fermée illustré à la figure 5 dans laquelle il est retenu en position fermée et verrouillé dans cette position, et selon lequel, en partant de la position fermée illustrée à la figure 5, une deuxième pression, à nouveau dans le sens de la fermeture, permet le déverrouillage du support articulé, puis de le relâcher pour obtenir son ouverture automatique sous l'effet du ressort de rappel 62.

La plaque 52 du cadre ou châssis 50 comporte notamment deux lumières verticales adjacentes 64 et 66 ainsi qu'un pion 78 de guidage d'un curseur 70 et qui sert aussi de butée à un ressort 72 de rappel élastique du curseur 70.

Plus précisément, le curseur 70 comporte une plaque verticale 74 de guidage dans laquelle est formée une lumière verticale 76 qui reçoit le pion 78 et le ressort de rappel élastique 72 qui est un ressort hélicoïdal de compression monté comprimé entre le pion 78 et le bord supérieur 80 de la lumière 76 de manière à solliciter élastiquement en permanence le curseur 70 verticalement vers le haut, en considérant les figures, avec le bord supérieur 82 de la plaque 74 en appui contre une portion en vis-à-vis de la face inférieure d'une aile horizontal supérieur 86 du cadre 50 qui relie entre elles les ailes 48.

Le curseur 70 comporte aussi une plaque inférieure horizontale 88 dont la face supérieure 90 est destinée à coopérer avec le bord inférieur 92, d'extrémité longitudinale avant, du badge 12 pour provoquer le déplacement vertical vers le bas du curseur 70, à l'encontre de l'effort élastique qui lui est appliqué par le ressort 72, comme on peut le voir notamment aux figures 4 et 5.

La plaque inférieure horizontale porte, sous sa face inférieure, un doigt 94, d'orientation horizontal, qui s'étend à travers la lumière 64 pour pouvoir agir sur un commutateur électrique 96 porté par une plaque à circuit imprimé 98 agencée dans le boîtier 14 entre le fond 20 et le châssis 50 et qui porte aussi d'autres composants électriques parmi lesquelles un connecteur 100 et une antenne 102 d'échanges de données avec le badge 12.

D'une manière analogue, le fond 36 du support articulé 18 porte un doigt 104, qui s'étend globalement horizontalement parallèlement au fond 36, et qui constituent une came pivotante, autour de l'axe A1, d'actionnement de l'organe de déclenchement d'un autre commutateur électrique 106 porté par la plaque à circuit imprimé 98.

On décrira maintenant le fonctionnement de l'agencement 10 selon l'invention en se référant notamment aux figures 3 à 5.

En partant de la position illustrée aux figures 1 et 3, l'utilisateur commence par introduire longitudinalement d'arrière en avant, c'est-à-dire de bas en haut en considérant les figures, le badge 12 selon la direction d'introduction I dans le logement 16 du support articulé 18 qui est dans sa position ouverte dans laquelle sa face supérieure ouverte est accessible.

Lors de l'introduction du badge 12 dans le logement 16, le bord d'extrémité longitudinale avant 92 vient intercepter la plaque 88 du curseur 70 qui se situe sur la trajectoire de ce dernier à l'intérieur du logement 16, le déplacement vertical correspondant du curseur 70 se traduisant par un même déplacement du doigt 94 qui vient alors déclencher le commutateur 96 qui est par exemple un commutateur pour l'alimentation du circuit électrique "+" SERVITUDE du véhicule en vue d'obtenir une séquence contrôlée de démarrage du véhicule qui est gérée par la centrale d'antivol, non représentée, du véhicule.

Après avoir introduit entièrement le badge 12 dans le logement 16, en comprimant le ressort 72, l'utilisateur, dont le doigt D et représenté schématiquement à la figure 4, maintient le badge 12 dans le logement 16 puis provoque le pivotement, dans le sens horaire, en considérant la figure 4, du support articulé 18 autour de son axe inférieur d'articulation A1 depuis sa position ouverte jusqu'à sa position fermée illustrée à la figure 5. Dans cette position, la partie supérieure du logement 16 est obturée par l'aile horizontale 86 du cadre 50 qui retient ainsi le badge 12 qui ne peut être extrait manuellement ni s'échapper accidentellement.

Au cours de ce pivotement, le doigt 94 continue d'agir sur l'organe d'actionnement du commutateur 96 tandis que le doigt 104 formant came agit sur l'autre commutateur 106 qui est un commutateur pour notamment l'alimentation électrique du "+" DEM du démarreur du moteur du véhicule ainsi que l'alimentation du "+" APC des accessoires électriques.

En fin de course de fermeture du support articulé 18, l'élément 58 provoque le verrouillage en position fermée du support articulé avec le badge 12 désormais en position introduite et active dans le logement 16 du support 18.

Pour ouvrir à nouveau le support articulé 18, en partant de la position représentée à la figure 5, l'utilisateur appuie sur la face transversale frontale 34 ou sur la face transversale frontale 13 du badge 12 qui est accessible par la face 34, pour provoquer le déverrouillage des moyens 58, 60, et il relâche ensuite l'effort appliqué pour obtenir l'ouverture automatique du support articulé 18 qui pivote alors autour de son axe inférieur d'articulation A1, dans le sens anti-horaire en considérant la figure 5 et ceci sous l'action du ressort de rappel 62.

Le support articulé 18 retourne alors dans sa position illustrée à la figure 4 dans laquelle le badge 12 peut être extrait manuellement, verticalement de bas en haut selon la direction d'extraction E indiquée à la figure 4. Lors de la course angulaire d'ouverture du support articulé 18, on provoque l'ouverture du commutateur 106 qui n'est plus enfoncé. Lors de l'extraction du badge 12 hors du logement 16 du support articulé 18, le curseur 70 remonte verticalement automatiquement sous l'action du ressort 72 et son doigt 94 n'agit plus sur le commutateur 96.

La conception selon l'invention permet aussi, en utilisant le même boîtier formant console, et donc en conservant la même esthétique à l'intérieur de l'habitacle du véhicule, d'équiper un véhicule dont les fonctions antivol sont assurées avec un échange de données « longue distance » avec le badge 12, ce dernier étant alors remplacé par un élément « neutre » de même forme et dimensions qui est introduit comme une clé dans le logement 16 du support articulé 18.

Lors du pivotement du support articulé jusqu'à mi-course, le doigt 94 actionne le commutateur 96. Si l'on relâche le support articulé 18, celui-ci revient automatiquement en position ouverte sous l'action du ressort 62.

La notion de mi-course peut être ressentie par l'utilisateur avec une sensation d'efforts plus important à exercer sur le support en prévoyant par exemple un deuxième ressort de butée (non représenté sur les figures). Lors du pivotement à fond du support articulé, les deux commutateurs 96 et 106 sont actionnés.

Comme précédemment, une pression à nouveau sur le support articulé 18 permet d'obtenir son ouverture.

## Revendications

1. Agencement (10), destiné à équiper un véhicule automobile, pour l'échange de données entre un support de données rigide (12), ou semi-rigide, contenant des données représentatives d'un utilisateur autorisé, et un dispositif d'échange de données, l'agencement comportant un boîtier (14) dans lequel le support de données (12) est introduit manuellement dans un logement (16) dans un support articulé (18) dudit boîtier (14) où il occupe une position active déterminée,
ledit support articulé (18) étant monté pivotant par rapport au corps du boîtier (14) autour d'un axe (A1) agencé à une première extrémité longitudinale (36) du support articulé (18), entre une position ouverte d'introduction ou d'extraction, dans laquelle une extrémité ouverte (36) est accessible, et une position fermée dans laquelle l'extrémité ouverte est obturée par une portion de paroi fixe (86) en vis-à-vis du corps du boîtier (14),
**caractérisé en ce que** ledit boîtier (14) comprend des moyens de commande d'ouverture et de verrouillage en position fermée dudit support articulé du type « push-push », c'est-à-dire du type selon lequel une première pression sur une partie du support articulé (18) permet de le fermer, en le faisant pivoter autour de son axe d'articulation, vers ladite position fermée
dans laquelle il est retenu et verrouillé, et
selon lequel, en partant de ladite position fermée, une deuxième pression, à nouveau dans le sens de la fermeture, permet le déverrouillage du support articulé (18) et son ouverture.

2. Agencement selon l'une quelconque des revendications précédentes, **caractérisé en ce que** le support articulé (18) est rappelé élastiquement (62) vers sa position ouverte, et **en ce qu'**il est prévu des moyens escamotables (58, 60) de verrouillage du support articulé (18) en position fermée.

3. Agencement selon l'une des revendications précédentes, **caractérisé en ce que** le boîtier (14) comporte un curseur (70) monté coulissant, sous l'action du support de données (12, 92), entre une position de repos vers laquelle il est rappelé élastiquement (72) et une position de déclenchement dans laquelle il agit sur un premier commutateur électrique (96) du boîtier (14) qui permet l'alimentation du circuit électrique de démarrage du véhicule et sur lequel le support de données (12, 92) vient agir lors de sa course d'introduction dans le logement (16) du support articulé (18).

4. Agencement selon l'une quelconque des revendications précédentes, **caractérisé en ce que** le support articulé (18) comporte une came (104) de déclenchement d'un deuxième commutateur électrique (106) du boîtier (14), qui permet l'alimentation électrique du démarreur du moteur, et qui agit sur ce commutateur lorsque le support articulé (18) pivote de sa position ouverte vers sa position fermée.

5. Agencement selon la revendication précédente, **caractérisé en ce que** le support articulé (18) est de forme générale complémentaire de celle du support de données (12) et, en position fermée, est reçu dans une fenêtre (22) du corps du boîtier (14) complémentaire de la forme du support articulé (18).

6. Agencement selon l'une quelconque des revendications précédentes, **caractérisé en ce que** le support articulé (18) est monté articulé par rapport au boîtier (14) autour d'un axe horizontal inférieur (A1), et **en ce que** le support articulé (18) est monté pivotant entre une position ouverte et une position fermée dans laquelle la direction générale longitudinale du support articulé (18) est sensiblement verticale.

7. Agencement selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Claims

1. Arrangement (10), designed to be fitted to a motor vehicle, for the interchange of data between a rigid or semi-rigid data medium (12) which contains data representing an authorized user and a data interchange device, the arrangement comprising a unit (14) into which the data medium (12) is introduced manually into a housing (16) in an articulated support (18) of said unit (14) in which it occupies a determined active position,
said articulated support (18) being mounted so as to pivot with respect to the body of the unit (14) about an axis (A1) arranged at a first longitudinal end (36) of the articulated support (18), between an open introduction or extraction position in which an open end (36) is accessible, and a closed position in which the open end is closed off by a fixed wall portion (86) opposite belonging to the body of the unit (14),
**characterized in that** said unit (14) comprises means of the "push-push" type for making said articulated support open and for locking it in the closed position, that is to say means of the type whereby a first push on a part of the articulated support (18) allows the latter to be closed, by making it pivot about its axis of articulation towards said closed position in which it is held and locked, and
whereby, starting out from said closed position, a second push, again in the direction of closing, allows the articulated support (18) to be unlocked and opened.

2. Arrangement according to the preceding claim, **characterized in that** the articulated support (18) is elastically returned (62) to its open position and retractable means (58, 60) are provided for locking the articulated support (18) in the closed position.

3. Arrangement according to either of the preceding claims, **characterized in that** the unit (14) comprises a slider (70) mounted to slide, under the action of the data medium (12, 92) between a position of rest towards which it is elastically returned (72), and a triggering position in which it acts on a first electric commutator (96) of the unit (14) which allows power to be applied to the electrical circuit for starting the vehicle and on which the data medium (12, 92) acts during its travel as it is introduced into the housing (16) of the articulated support (18).

4. Arrangement according to any one of the preceding claims, **characterized in that** the articulated support (18) comprises a cam (104) for triggering a second electric commutator (106) of the unit (14), which allows electrical power to be applied to the engine starter, and which acts on this commutator when the articulated support (18) pivots from its open position to its closed position.

5. Arrangement according to the preceding claim, **characterized in that** the articulated support (18) is of an overall shape that complements that of the data medium (12) and, in the closed position, is housed in a window (22) in the body of the unit (14) that complements the shape of the articulated support (18).

6. Arrangement according to any one of the preceding claims, **characterized in that** the articulated support (18) is mounted articulated with respect to the unit (14) about a lower horizontal axis (A1), and the articulated support (18) is mounted to pivot between an open position and a closed position in which the overall longitudinal direction of the articulated support (18) is roughly vertical.

7. Arrangement according to any one of the preceding claims, **characterized in that** it is fitted to a motor vehicle whose antitheft functions are fully or partially fulfilled by the processing of data, some of which, contained in the data medium (12), represent an authorized user or a group of authorized users of the vehicle.

## Patentansprüche

1. Anordnung (10), die dazu bestimmt ist, ein Kraftfahrzeug auszustatten, für den Datenaustausch zwischen einem steifen oder halbsteifen Datenträger (12), der für einen berechtigten Benutzer repräsentative Daten enthält, und einer Datenaustauschvorrichtung, wobei die Anordnung ein Gehäuse (14) aufweist, bei dem der Datenträger (12) von Hand in ein Fach (16) in einem gelenkigen Halter (18) des Gehäuses (14) eingeführt wird, wo er eine bestimmte aktive Stellung einnimmt,
wobei der gelenkige Halter (18) bezüglich des Körpers des Gehäuses (14) um eine an einem ersten Längsende (36) des gelenkigen Halters (18) angeordnete Achse (A1) zwischen einer offenen Einführ- oder Entnahmestellung, in der ein offenes Ende (36) zugänglich ist, und einer geschlossenen Stellung, in der das offene Ende von einem gegenüberliegenden festen Wandabschnitt (86) des Körpers des Gehäuses (14) verschlossen wird, schwenkbar montiert wird,
**dadurch gekennzeichnet, dass** das Gehäuse (14) Einrichtungen zur Steuerung des Öffnens und des Verriegelns des gelenkigen Halters in der geschlossenen Stellung von der Art "Push-Push" enthält, d.h. von der Art, gemäß der ein erster Druck auf einen Teil des gelenkigen Halters (18) es ermöglicht, ihn zu verschließen, indem er um seine Gelenkachse in die geschlossene Stellung geschwenkt wird, in der er zurückgehalten und verriegelt wird, und
gemäß der ausgehend von der geschlossenen Stellung ein zweiter Druck, erneut in Schließrichtung, das Entriegeln des gelenkigen Halters (18) und sein Öffnen erlaubt.

2. Anordnung nach dem vorhergehenden Anspruch, **dadurch gekennzeichnet, dass** der gelenkige Halter (18) elastisch (62) in seine offene Stellung zurückgestellt wird, und dass einziehbare Einrichtungen (58, 60) zur Verriegelung des gelenkigen Halters (18) in der geschlossenen Stellung vorgesehen sind.

3. Anordnung nach einem der vorhergehenden Ansprüche, **dadurch gekennzeichnet, dass** das Gehäuse (14) einen Schieber (70) aufweist, der unter der Wirkung des Datenträgers (12, 92) zwischen einer Ruhestellung, in die er elastisch zurückgestellt wird (72), und einer Auslösestellung gleitend montiert wird, in der er auf einen ersten elektrischen Schalter (96) des Gehäuses (14) einwirkt, der die Versorgung des Anlasserstromkreises des Fahrzeugs erlaubt, und auf den der Datenträger (12, 92) bei seinem Einführweg in das Fach (16) des gelenkigen Halters (18) einwirkt.

4. Anordnung nach einem der vorhergehenden Ansprüche, **dadurch gekennzeichnet, dass** der gelenkige Halter (18) eine Nocke (104) zum Auslösen eines zweiten elektrischen Schalters (106) des Gehäuses (14) aufweist, der die Stromversorgung des Anlassers des Motors erlaubt, und die auf diesen Schalter einwirkt, wenn der gelenkige Halter (18) von seiner offenen Stellung in seine geschlossene Stellung schwenkt.

5. Anordnung nach dem vorhergehenden Anspruch, **dadurch gekennzeichnet, dass** der gelenkige Halter (18) allgemein eine komplementäre Form zu derjenigen des Datenträgers (12) hat und in der geschlossenen Stellung in einem Fenster (22) des Körpers des Gehäuses (14) aufgenommen wird, das komplementär zur Form des gelenkigen Halters (18) ist.

6. Anordnung nach einem der vorhergehenden Ansprüche, **dadurch gekennzeichnet, dass** der gelenkige Halter (18) bezüglich des Gehäuses (14) um eine untere waagrechte Achse (A1) gelenkig montiert ist, und dass der gelenkige Halter (18) zwischen einer offenen Stellung und einer geschlossenen Stellung schwenkbar montiert ist, in der die allgemeine Längsrichtung des gelenkigen Halters (18) im Wesentlichen senkrecht ist.

7. Anordnung nach einem der vorhergehenden Ansprüche, **dadurch gekennzeichnet, dass** sie ein Kraftfahrzeug ausstattet, dessen Diebstahlsicherungsfunktionen teilweise oder vollständig durch Verarbeitung von Daten gewährleistet werden, von denen bestimmte, die im Datenträger (12) enthalten sind, für einen berechtigten Benutzer oder eine Gruppe von berechtigten Benutzern des Fahrzeugs repräsentativ sind.
